(19) **Europäisches Patentamt** / **European Patent Office** / **Office européen des brevets**

(11) **EP 4 498 625 A1**

(12) **EUROPEAN PATENT APPLICATION**

(43) Date of publication:
29.01.2025 Bulletin 2025/05

(21) Application number: 23217633.9

(22) Date of filing: 18.12.2023

(51) International Patent Classification (IPC):
$H04L\ 5/00^{(2006.01)}$   $H04L\ 27/26^{(2006.01)}$

(52) Cooperative Patent Classification (CPC):
H04L 5/001; H04L 27/2621

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.07.2023 US 202318358179

(71) Applicant: INTEL Corporation
Santa Clara, CA 95054 (US)

(72) Inventors:
• GROSS, Shahar
74205 Nes-Tziona (IL)
• TZABAR, Eyal
4841319 Rosh Haayin (IL)
• VAYSMAN, Slava
1777002 Nazareth Illit (IL)
• VITURI, Shlomi
6732925 Tel Aviv (IL)

(74) Representative: 2SPL Patentanwälte PartG mbB
Landaubogen 3
81373 München (DE)

(54) **USE OF CUSTOMIZED FREQUENCY ROTATION FOR PUNCTURED CHANNELS**

(57) Techniques are disclosed for determining customized frequency rotation values for a number of wireless channel configurations. The channel configurations may define various parameters of a wireless channel in accordance with a communication protocol, such as the channel bandwidth, the number of sub-channels, and which of the sub-channels may be punctured. The frequency rotation values may be obtained by determining the Peak to Average Power Ratio (PAPR) values for different combinations of frequency rotation values that are applied to the sub-channels of the wireless channel on a per-configuration basis. Thus, for each configuration, the lowest maximum PAPR or other suitable threshold value may be used to identify the frequency rotation values for that particular configuration. The frequency rotation values may then be applied at run time based upon the current wireless channel configuration for data transmissions via the wireless channel.

100

FIG. 1

**EP 4 498 625 A1**

**Description**

TECHNICAL FIELD

Aspects described herein generally relate to techniques for utilizing customized frequency rotation for punctured channels and, in particular, to the selection of frequency rotation per channel configuration as a function of Peak to Average Power Ratio (PAPR).

BACKGROUND

WiFi protocols utilize configurable channels depending upon current network demands and the particular application. For instance, WiFi 6 (IEEE 802.11 ax, finalized on September 1, 2020) may have a channel bandwidth of 20 MHz, 40 MHz, 80 MHz, or 160 MHz. WiFi 7 (IEEE 802.be, with the initial draft being submitted in March of 2021) may also utilize these channel bandwidths, as well as an increased channel bandwidth of 320 MHz. For both WiFi 6 and WiFi 7, when 80 MHz, 160, MHZ, or 320 MHz channels are used, the wireless channel may comprise a number of sub-channels, which may comprise primary and secondary channels of at least 20 MHz, as well as additional sub-channels that may be split or combined according to detected network needs.

Conventional WiFi protocols require that data transmissions be achieved through the continuous use of the primary and secondary sub-channels. Thus, if interference was present in any portion of the primary or secondary sub-channels, then the entire network would be limited to the use of the primary sub-channel. Thus, preamble puncturing is implemented introduced by WiFi 7 (802.11be) to improve spectral efficiency by allowing a Wi-Fi 7 access point (AP) to transmit a "punctured" (i.e. non-continuous) portion of the spectrum channel if some of the channel is being used by legacy users. Specifically, WiFi 7 allows for 80 MHz, 160 MHz, or 320 MHz channels to notch a 20 MHz portion of its operating bandwidth when interference is detected (e.g. radar) within that 20 MHz slice of spectrum. WiFi 7 further improves upon this concept with multi-resource unit (RU) puncturing, which enables the use of multiple resource units and puncturing to avoid the congestion caused by interference and to maintain high transmission speeds.

However, although the current WiFi 7 standard allow for channel puncturing, this is realized by using the same frequency rotation values for each channel configuration and bandwidth (e.g. for 80 MHz, 160 MHz, and 320 MHz channels) by simply repeating the 80 MHz frequency rotation values for the remainder of the other 20 MHz sub-channels. As a result, the Peak to Average Power Ratio (PAPR) may increase for some puncturing combinations. Therefore, current WiFi standards are inadequate, and there is a need to improve upon the frequency rotation values that are specified in the standards to improve upon PAPR performance for different channel puncturing combinations.

BRIEF DESCRIPTION OF THE DRAWINGS/FIGURES

The accompanying drawings, which are incorporated herein and form a part of the specification, illustrate the aspects of the present disclosure and, together with the description, and further serve to explain the principles of the aspects and to enable a person skilled in the pertinent art to make and use the aspects.

FIG. 1 illustrates a wireless network, in accordance with the present disclosure;
FIG. 2 illustrates conventional channel puncturing;
FIG. 3A illustrates a plot of PAPR values versus different punctured 20 MHz sub-channels within a 160 MHz channel, in accordance with the disclosure.;
FIG. 3B illustrates a plot of PAPR values versus different frequency rotation combinations for a 160 MHz channel with puncturing in the first sub-channel index, in accordance with the disclosure;
FIG. 4A illustrates a plot of PAPR values versus different 40 MHz sub-channel puncturing within a 320 MHz channel, in accordance with the disclosure;
FIG. 4B illustrates a plot of PAPR values versus different frequency rotation combinations for a 320 MHz channel with 40 MHz sub-channel puncturing realized via puncturing in the first two 20 MHz channels, in accordance with the disclosure;
FIG. 5 illustrates a device, in accordance with the disclosure; and

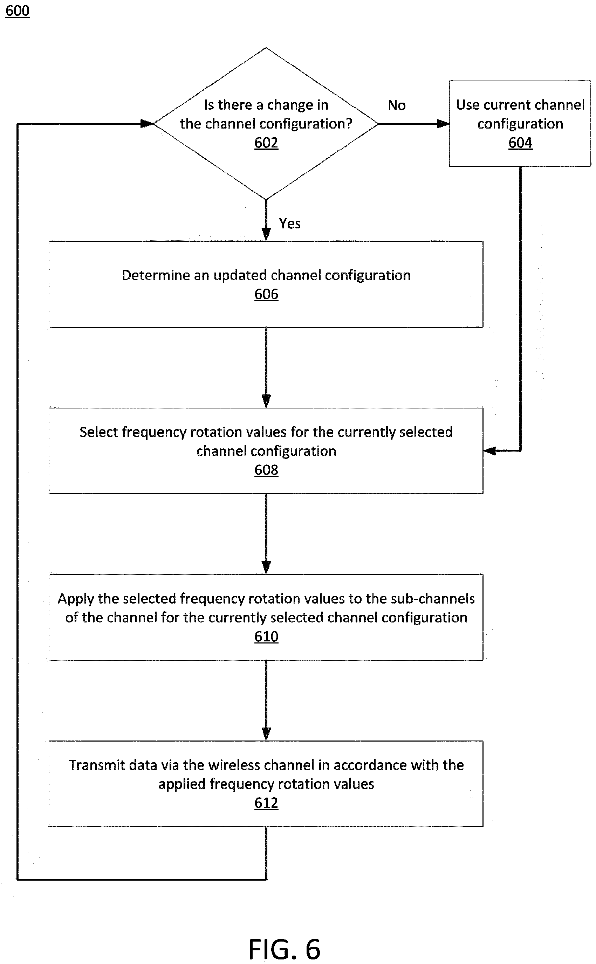

FIG. 6 illustrates a process flow, in accordance with the disclosure.

The exemplary aspects of the present disclosure will be described with reference to the accompanying drawings. The drawing in which an element first appears is typically indicated by the leftmost digit(s) in the corresponding reference number.

DETAILED DESCRIPTION

In the following description, numerous specific details are set forth in order to provide a thorough understanding of the aspects of the present disclosure. However, it will be apparent to those skilled in the art that the aspects, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

Again, the current WiFi 7 standard allows for channel puncturing but utilizes the same frequency rotation values regardless of the channel configuration. For example, WiFi 7 includes the ability to use puncturing with a resolution of 20MHz sub-channels. The puncturing functionality is typically performed to avoid collisions or interference with licensed devices (e.g. radar) that operate on fixed channels. This is a key feature in the WiFi 7 standard, which achieves high spectral efficiency in the Ultra High Band (UHB) channels.

A WiFi 7 device (e.g. an access point (AP)) may transmit 2 types of punctured frames: legacy-DUP and WiFi 7 physical layer protocol data units (PPDUs). The legacy DUP is a duplication of a 20MHz bandwidth in all the 20 MHz sub-channels of the full channel bandwidth. For instance, a channel with a 320 MHz bandwidth that includes punctured (i.e. unused) 40 MHz sub-channels is assembled from 14 frequency repetitions of the same 20MHz channels.

An issue with the use of channel puncturing is that the resulting signal experiences a very high Peak to Average Power Ratio (PAPR). Thus, a frequency rotation value is applied in the frequency domain to each of the 20MHz sub channels. As an example, the PAPR of an orthogonal frequency-division multiplexing (OFDM) signal without repetition is about 10 dB, whereas the PAPR with frequency repetition without rotation can reach 20 dB. The WiFi 7 standard defines legacy frequency rotation values that reduce the PAPR to ~14 dB. However, the frequency rotation values defined by the Wi-Fi 7 standard are constant for each channel bandwidth and puncturing configuration.

Another issue with puncturing legacy DUP frames is that the selected frequency rotation values do not fit some of the puncturing combinations, and the PAPR increases dramatically. The high variation of PAPR causes an instability of the transmitter's performance and forces the transmitter to take high backoffs and to reduce the transmitted power. These high backoffs in transmission power may also damage the link quality and reduce the link range.

The techniques as further described herein address these issues by providing customized, per channel configuration frequency rotation values. Although the techniques are described throughout this disclosure in the context of the WiFi 7 communication standard, the disclosure is not limited to the use of these specific communication standards and/or frequency bands. The techniques described herein may implement any suitable type of communication standard, protocols, and/or frequency bands to facilitate communications between any suitable type and/or number of devices as further described herein.

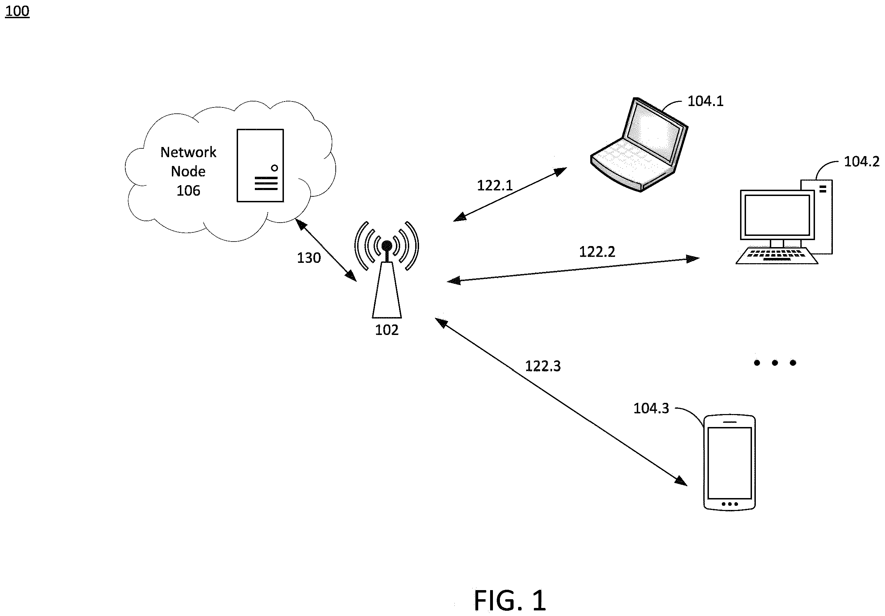

FIG. 1 illustrates a wireless network, in accordance with the present disclosure. The wireless network 100 as shown in FIG. 1 may include a servicing wireless device 102, as well as any suitable number of wireless communication devices 104.1-104.N, with three being shown for purposes of brevity. The wireless communication devices 104.1-104.N may be configured to perform wireless communications with the servicing wireless device 102 as shown in FIG. 1 and/or other components via these communications, such as the network node 106 as shown in FIG. 1. The wireless communication devices 104.1-104.N may be implemented as any suitable type of device that is configured to perform wireless communications with the servicing wireless device 102. Such devices may include any suitable type of user equipment (UE) such as a mobile phone, a laptop computer, a personal computer, wearable devices, etc., or any other suitable type of device configured to perform wireless communications.

The servicing wireless device 102 may form part of the network node 106 or be implemented as a separate component. The servicing wireless device 102 may be implemented as any suitable type of wireless communication device configured to service any suitable number of wireless communication devices 104.1-104.N within a particular coverage zone or range, and may do so by facilitating data communications in accordance with any suitable number and/or type of communication protocols. The servicing wireless device 102 may thus be alternatively implemented (and referred to herein in such instances) as a wireless access point (AP), an eNodeB, a small cell, a femto cell, a pico cell, a micro cell, a road side unit, etc., or any other suitable type of wireless device capable of wireless communications. The servicing wireless device 102 may, when implemented separately from the network node 106, communicate with the network node 106 using the link 130, which may represent one or more wired and/or wireless backhaul communication paths to support the servicing wireless device 102 servicing one or more of the wireless communication devices 104.1-104.N

As part of its servicing operations, the servicing wireless device 102 may perform data transmissions to, and/or receive data transmissions from, any suitable number of wireless communication devices 104.1-104.N. To do so, the servicing wireless device 102 may transmit and/or receive data in accordance with communication protocols that may comply with any suitable communication standards, such as the WiFi 7 standards as discussed herein. These wireless communications may be implemented via the respective links 122.1-122.3 as shown in FIG. 1, which may represent any suitable number of wireless links in accordance with a particular communication protocol that is supported by the servicing wireless device 102 and the wireless communication devices 104.1-104.N.

Of note, the techniques described herein are not limited to WiFi standards, and may include the use of any suitable type of communication protocol that may utilize punctured channels for wireless data communications. However, it may be particularly useful and convenient to utilize WiFi standards for such communications, which enable and define techniques for implementing punctured channel transmissions. Moreover, the techniques described herein are not limited to a particular region, frequency spectrum, the use of WiFi frequency bands, WiFi channel bandwidths, or the use of 20 MHz sub-channels. Instead, the techniques as described herein may be implemented for any suitable frequency band, channel, and/or sub-channel allocation scheme(s), which may include channels smaller than or larger than Wi-Fi channels and sub-channels as discussed herein, frequency spectrums and/or frequency bands of operation different than WiFi frequency bands, etc. This may additionally or alternatively include communication standards, protocols, and/or frequency bands that are not currently in use at the time of this writing.

Referring now back to FIG. 1, the techniques as further discussed herein are primarily directed to those implemented by the servicing wireless device 102 to realize data transmissions that support wireless communications between the servicing wireless device 102 and the served devices. The techniques as described herein may additionally or alternatively be performed by any suitable component within a wireless network, such as one or more of the wireless communication devices 104.1-104.N, or other wireless communication devices not shown in the Figures. However, the techniques may be particularly advantageous when performed by the servicing wireless device 102, as this entity controls the selection of the channel configuration used for wireless communications based upon channel conditions, interference, changes in the network environment such as regulating traffic, etc. With this in mind, the techniques are further discussed herein with respect to the servicing wireless device 102, although it is understood that this is an illustrative and non-limiting scenario.

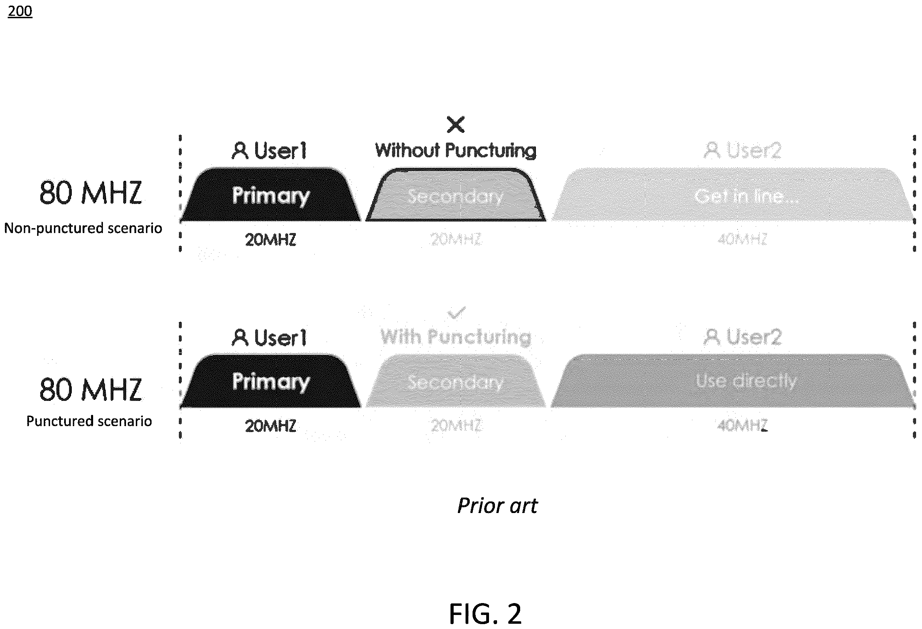

Again, the servicing wireless device 102 may perform wireless communications in accordance with WiFi 7 communication standards, which allow channel puncturing. To further describe this concept, reference is now made to FIG. 2, which illustrates conventional channel puncturing for WiFi 7. The example shown in FIG. 2 is with respect to an 80 MHz WiFi 7 channel, although the same concept may be extended to channels having a larger bandwidth such as 160 MHz and 320 MHz channels. As shown in the upper portion of FIG. 2, for both the non-punctured and the punctures case, the 80 MHz channel comprises a 20 MHz primary channel and a 20 MHz secondary channel. The remaining 40 MHz may be split into separate 20 MHz sub-channels or combined into a single 40 MHz sub-channel depending upon current network demands.

It is assumed for both scenarios that there is interference and/or another application (e.g. radar) that requires the use of the 20 MHz sub-channel identified with the secondary channel. Thus, the 20 MHz sub-channel identified with the secondary channel cannot be used in this scenario. For the non-puncturing scenario, continuity needs to be preserved for the entire 80 MHz channel bandwidth, and thus all communications within the network need to revert to the primary channel only. However, when channel puncturing is implemented, the 20 MHz sub-channel identified with the secondary channel may remain unused and "notched out" while the remaining 40 MHz of spectrum may be used to support wireless communications. In other words, channel puncturing refers to puncturing a portion of a channel's bandwidth to enable a non-continuous use of that channel, while the punctured portion of the channel (i.e. the punctured 20 MHz sub-channel as shown in FIG. 2) remains unused.

The servicing wireless device 102 may likewise utilize channel puncturing in accordance with WiFi 7 communication standards. To do so, the servicing wireless device 102 may detect interference and/or collisions with respect to transmissions via one or more sub-channels, and then perform channel puncturing such that one or more of the sub-channels are punctured or unused, as discussed above with respect to FIG. 2. The servicing wireless device 102 may dynamically adjust the channel configuration of a wireless channel used for data transmissions based upon various observations of network parameters and/or the changing needs of the wireless network 100. To provide some illustrative and non-limiting scenarios, any combination of the desired throughput, the number of serviced users, bandwidth, load, the presence of interference within the channel, information regarding sub-channels in use by radar or other transmissions, etc. may be used by the servicing wireless device 102 to determine a particular channel configuration for a wireless channel to be used for data transmissions.

As used herein, the term "channel configuration" may refer to any suitable number and/or type of parameters that are used to define the spectrum and spectral structure of a wireless channel for transmitting and/or receiving data. As a non-limiting and illustrative scenario, the channel configuration may identify the bandwidth of the channel, such as 80 MHz, 160 MHz, 320 MHz, etc., as discussed herein and used in accordance with WiFi 7 communication standards. Additionally or alternatively, the channel configuration may identify the number and/or bandwidth of the sub-channels within the wireless channel in accordance with the particular communication protocol. Furthermore, when puncturing is implemented as discussed herein, the channel configuration may identify a spectral location of one or more sub-channels within the channel that is/are punctured.

In other words, a channel configuration may identify a wireless channel bandwidth and a number of sub-channels used within the wireless channel in accordance with a communication protocol (such as WiFi 7), the bandwidth of the primary and secondary channels, the bandwidth of the sub-channels, as well as the spectral location of one or more of the sub-channels within the wireless channel that are punctured. Thus, the servicing wireless device 102 may determine a specific channel configuration based upon network conditions and/or needs, as noted above, which may define the spectral location of punctured sub-channels. The spectral location of the punctured sub-channels (as well as other parameters identified by the channel configuration) may thus change over time, as defined by each of the various channel configurations that may be determined by the servicing wireless device 102. To provide an illustrative and non-limiting scenario, for a 160 MHz wireless channel that comprises eight 20 MHz sub-channels, there may be eight different channel configurations, each corresponding to a different spectral location of the punctured sub-channel within the wireless channel. Of course, additional channel configurations may also exist, which define other parameters of the wireless channel as noted above.

As further discussed herein, the spectral location of each punctured sub-channel may be referred to as an index. For instance, using the scenario for the 160 MHz channel described above, an index of '1' would refer to a spectral location of a punctured sub-channel at the first 20 MHz sub-channel, index '2' would refer to the spectral location of a punctured sub-channel at the second 20 MHz sub-channel, and so on. Thus, each channel configuration (also referred to herein as a puncturing configuration when channel puncturing is used) identifies the spectral location of the punctured sub-channel with respect to each of the indexes 1-8 in this scenario.

Before providing further detail regarding the use of the frequency rotation values by the servicing wireless device 102, a further discussion regarding frequency rotation values is now warranted. Again, the WiFi 7 standard defines frequency rotation values, which are applied to each of the sub-channels within a wireless channel to reduce constructive interference and, in turn, reduce the resulting PAPR. The application of the frequency rotation values to the sub-channels of the frequency may be performed in the digital domain as a digital signal processing (DSP) multiplicative operation. The term "frequency rotation" as used herein refers to the gamma rotation that is used in accordance with the various IEEE 802.11xx standards, i.e. any of the WiFi-related standards, including the WiFi 7 communication standard as discussed herein. The frequency rotation value is thus a phase value that is constant for each 20 MHz sub-channel, and represents an exponent $e^{j\phi}$ with a magnitude '1,' where $\phi$ represents the frequency rotation that is based upon the sub-channel bandwidth. Thus, when a DSP operation is performed by multiplying a set of frequency rotation values in the frequency domain with each one of the respective sub-channels for a particular wireless channel configuration, the gain is unaffected and only the phase is changed. In other words, the frequency rotation values, when multiplied by each of the sub-carrier signals in the frequency domain, result in a phase rotation of each of the 20 MHz sub-channels out of the full transmitted channel bandwidth. To simplify the DSP operations, the frequency rotation values may be quantized into values such as +90 degrees ($e^{j\phi}$) and -90 degrees ($e^{-j\phi}$) values, as well as 0 degrees and 180 degrees, etc.

However, and as noted above, the transmission of punctured channels may increase the PAPR, which is a result of the spectral proximity of the 20 MHz sub-channels resulting in constructive interference during transmission. Moreover, the WiFi 7 standard simply repeats the frequency rotation values for each set of four 20 MHz sub-carriers within a channel, and are not adjusted among the different channel configurations to consider the presence and/or spectral location of punctured channels. For instance, the WiFi 7 standard defines the frequency rotation values for the 20 MHz sub-channels of a 320 MHz channel using the aforementioned indexing notation described above, which provides frequency rotation values for indexes 1 to 16 as follows:

$$[1 \;-1 \;-1 \;-1 \;1 \;-1 \;-1 \;-1 \;1 \;-1 \;-1 \;-1 \;1 \;-1 \;-1 \;-1]$$

As another example, the WiFi 7 standard defines the frequency rotation values for the 20 MHz sub-channels of a 160 MHz channel using the aforementioned indexing notation described above, which provides frequency rotation values for indexes 1 to 8 as follows:

$$[1 \;-1 \;-1 \;-1 \;1 \;-1 \;-1 \;-1].$$

In other words, and referencing the 160 MHz channel, the multiplication of each frequency rotation value in the frequency domain via a DSP operation results in a phase shift of +90 degrees, -90 degrees, -90 degrees, -90 degrees, +90 degrees, -90 degrees, -90 degrees, and -90 degrees, respectively, for the eight 20 MHz sub-channels. This frequency rotation operation is thus performed via DSP for each 20 MHz sub-channel prior to transmitting the signal over the wireless channel. As a result, the WiFi 7 standard achieves reduced PAPR values by reducing the constructive interference among the different sub-channels.

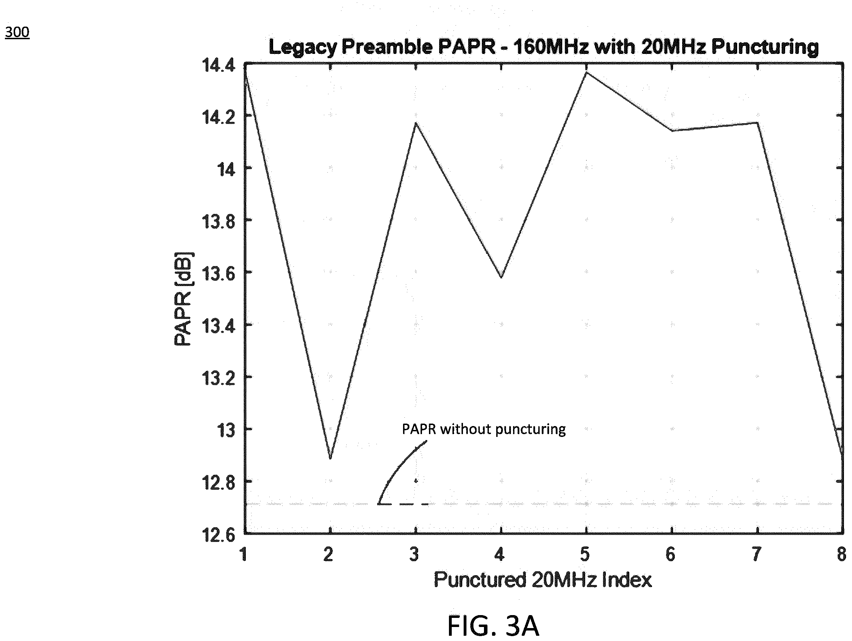

However, the PAPR values may change significantly between the different puncturing configurations, and thus the application of the same frequency rotation values for different puncturing configurations may likewise result in variations in the PAPR per configuration. FIG. 3A illustrates this effect via a plot of PAPR values obtained by applying the WiFi 7 standardized frequency rotation values to each of the eight 20MHz sub-channels for each one of eight different configurations. Thus, the index values represent which of the 20 MHz sub-channel is punctured (i.e. the first 20 MHz sub-channel for index '1,' and so on). Specifically, FIG. 3A illustrates the different PAPR values of a signal with frequency repetition and puncturing of a single 20MHz-channel at eight different spectral locations (i.e. indexes) within the wireless channel. As shown in FIG. 3A, the PAPR varies significantly between the different puncturing configurations and may reach up to 14.5 dB. For the sake of comparison, it is noted that for non-punctured signals, the PAPR of a 160MHz channel without frequency repetition is 10 dB, whereas the PAPR of a 160 MHz of non-HT DUP (with frequency repetition over the eight 20 MHz sub-channels) is 12.7dB. The latter of these two scenarios is shown in FIG. 3A as the dashed line representing the 12.7 dB PAPR value, which is provided as a non-punctured comparison to the corresponding PAPR for the different puncturing configurations.

Thus, the WiFi 7 standard utilizes "standardized" frequency rotation values regardless of the particular puncturing configuration, acknowledging a tradeoff between the different PAPR variations among the different channel configurations. However, the techniques described herein acknowledge that the PAPR may be further improved by providing customized frequency rotation values per channel configuration. To provide an illustrative and non-limiting scenario, this may include utilizing different frequency rotation values for each of the puncturing configurations as shown in FIG. 3A, as well as any other suitable number of channel configurations that may identity any of the various channel parameters as noted herein.

Therefore, and as noted above, the servicing wireless device 102 may determine a channel configuration of a wireless channel from among a number of possible channel configurations, which may be in response to the presence of interference, current network conditions or demands, etc. Once determined, the servicing wireless device 102 may then select corresponding frequency values for that particular wireless channel configuration, which are then applied to the sub-channels within the wireless channel (such as via DSP multiplication with the different 20 MHz sub-carriers as noted above). Thus, the frequency rotation values may be selected from among a set of frequency rotation values, with each of the frequency rotation values from among the set being different from one another and corresponding to each one of the channel configurations.

Turning back now to FIG. 1, the servicing wireless device 102 may comprise a transmitter or transceiver (not shown in FIG. 1), which is configured to transmit data. To do so, the servicing wireless device 102 may transmit data via a particular wireless channel that is defined by the determined channel configuration. Such data transmissions may be performed in accordance with the application of the selected frequency rotation values to the respective sub-channels within that wireless channel. In other words, the servicing wireless device 102 may implement software, hardware, or combinations of these to select the frequency rotation values from a predefined bank (i.e. a set of frequency rotation values) according to the current puncturing configuration. As a result, the transmitter performance increases, the link quality improves, and the user experience improves dramatically.

Thus, a set of frequency rotation values may be generated and stored for each puncturing configuration prior to the operation of the servicing wireless device 102. This set of frequency rotation values may be based upon a selection, for each one of a number of channel configurations (such as for all possible channel configurations) of frequency rotation values that result in a corresponding PAPR value. The corresponding PAPR value may be a maximum PAPR value across all sub-channels for that set of frequency rotation values, as further noted herein, which is less than or equal to a predetermined threshold PAPR value. The predetermined threshold PAPR value may be any suitable predetermined PAPR value, the details of which are further discussed below.

To determine the frequency rotation values on a per channel configuration basis, any suitable number and/or type of techniques may be implemented. This may include the use of offline techniques that identify the frequency rotation values for different channel configurations, which are then stored in a memory or other suitable location that is accessed by the servicing wireless device 102 once a channel configuration is determined. As a non-limiting and illustrative scenario, a simulation may be performed offline to determine the frequency rotation values per channel configuration as a function of any suitable number and/or type of parameters. This may include the use of any suitable type of simulation that computes, for each one of a number of channel configurations (such as all possible channel configurations), resulting (i.e. simulated or computed) PAPR values for a transmitted signal upon applying each one of a number of frequency rotation values, which may comprise the maximum PAPR value (such as the worst case PAPR across all sub-channels) obtained by applying, for each puncturing configuration, different sets of frequency rotation values. That is, the frequency rotation values may be determined by selecting, for each channel configuration, the frequency rotation values that result in a corresponding PAPR value that is the lowest maximum PAPR among the computed maximum PAPR values for each channel configuration. In other words, the minimum or lowest PAPR value may correspond to, for each puncturing configuration that is simulated, the lowest of all maximum PAPR values resulting from the application of different sets of frequency rotation values. Alternatively, the frequency rotation values may be determined by selecting, for each channel configuration, any one of several frequency rotation values that result in a corresponding PAPR value that meets (i.e. is at least equal to but may be smaller) than a predetermined threshold PAPR value. Thus, the predetermined threshold PAPR value may comprise the lowest computed PAPR value (such as from among the set of corresponding maximum PAPR values) per channel configuration, or alternatively may comprise a PAPR value that is greater than the lowest maximum PAPR value based upon the needs of a particular application.

In other words, the set of frequency rotation values are determined based upon a computation, for each one of the channel configurations, of a respective set of PAPR values. Each one of the set of PAPR values corresponds to the application of different frequency rotation values to the sub-channels for that channel configuration. The maximum of the PAPR values may then be used such that the frequency rotation values are then selected for each channel configuration based upon which frequency rotation values yield the lowest maximum PAPR value (or meets another suitable predetermined PAPR threshold value) from among the computed maximum PAPR values.

Because an infinite number of frequency rotation values may exist for each channel configuration, the techniques described herein may advantageously implement a phase quantization process that reduces the number of combinations of frequency rotation values that may be computed per channel configuration to a predetermined number of combinations. In a non-limiting and illustrative scenario, the frequency rotation values may be determined for each one of the channel configurations by quantizing the different frequency rotation values to 0 degrees, +90 degrees, -90 degrees, and 180 degrees, which matches that used by the WiFi 7 standard as noted herein, or any subset thereof, such as 0 degrees and 180 degrees as further discussed herein. In doing so, a finite and predetermined number of combinations of frequency rotation values may be obtained for each one of the channel configurations. It is noted that the quantization of the phase values to two values, as well as the specific use of $\pm$ 90 degrees, 0 degrees, 180 degrees, etc., is provided for ease of explanation and not limitation. The techniques described herein may compute frequency rotation values using any suitable number of phase quantizations and/or quantization values that may differ from these quantized phase values.

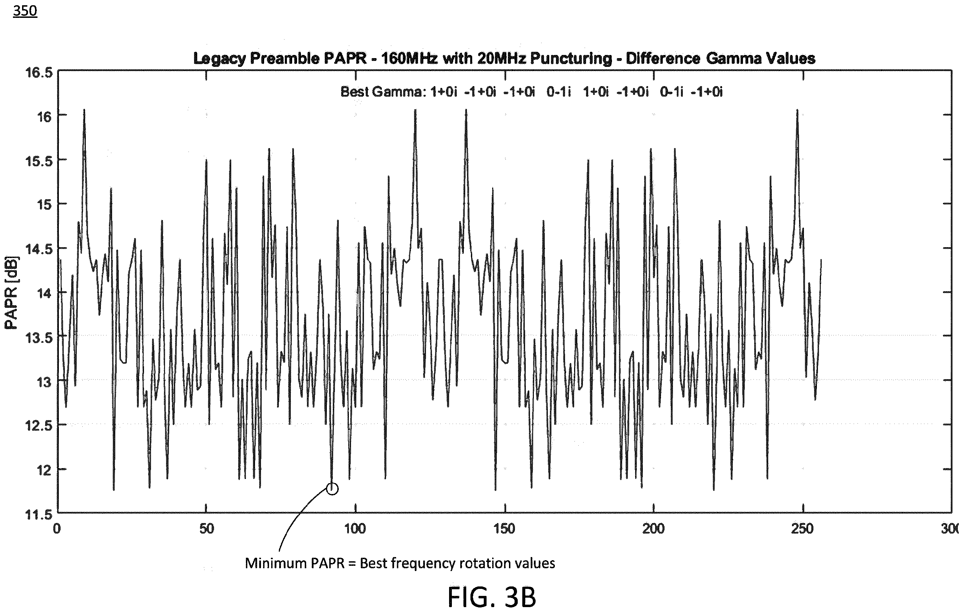

A demonstration of the computation of frequency rotation values is shown with respect to FIG. 3B. The plot in FIG. 3B corresponds to one of the eight puncturing configurations as shown in FIG. 3A. Specifically, FIG. 3B illustrates a plot of PAPR values versus different frequency rotation value combinations for a 160 MHz channel with puncturing in the first sub-channel index. In other words, the plot in FIG. 3B corresponds to a set of 256 frequency rotation values that are possible for a 160 MHz channel configuration in which the first 20 MHz sub-channel is punctured (i.e. index 1 from FIG. 3A). Due to the use of the aforementioned phase quantization values, which is assumed to be four different values as noted herein (i.e. 0 degrees, +90 degrees, -90 degrees, and 180 degrees) for this scenario, the total number of possible combinations for a single punctured 20 MHz sub-channel for a 160 MHZ channel bandwidth is $4^n$, with n representing the total number of sub-channels (8 in this scenario). Therefore, the 256 data points as shown in FIG. 3B represent a sample subset of a larger total number of 65,536 data points in this scenario, which are obtained by using a phase quantization of 0 and 180 degrees. The additional data points have been truncated for ease of explanation and brevity.

FIG. 3B therefore represents a "sweep" over the frequency rotation values with a resolution (e.g. quantization) of 0 and 180 degrees when the first 20 MHz sub-channel is punctured, and includes 256 data points. Each of these 256 data points represents the frequency rotation values to be applied to the eight 20 MHz sub-carriers for this particular puncturing configuration using quantized phase values of 0 and 180 degrees, as well as the corresponding computed maximum (i.e. worst case) PAPR value from doing so. As shown in FIG. 3B, there are several options in which the application of the frequency rotation values reduces the maximum PAPR to less than that of the non-punctured signal (12.7 dB as shown in FIG. 3A). The optimum frequency rotation values are thus selected that correspond to (in this illustrative scenario and from among the subset of data samples as shown) a lowest maximum PAPR value of about 11.7 dB. Of course, this simulation and analysis may be expanded to the total larger number of 65,536 data points using additional quantization values or, alternatively, any subset of these data points to obtain frequency rotation values that satisfy a predetermined PAPR value. Therefore, the predetermined PAPR threshold in this scenario, which may comprise the lowest maximum PAPR value across all quantized phase combinations of frequency rotation values or a smaller subset thereof (0 and 180 degrees in the scenario as shown in FIG. 3B), may be less than the PAPR value that results from the transmission of a signal without puncturing (i.e. a 160 MHz channel without channel puncturing).

Therefore, for this particular channel configuration in which the first 20 MHz sub-channel is punctured, the corresponding "best" frequency rotation values as shown in FIG. 3B may be selected and stored with the set of frequency rotation values as noted above. This process may then be repeated for each channel configuration by selecting the "best" frequency rotations per channel configuration as a function of the corresponding PAPR values (such as those corresponding to the lowest maximum PAPR value per channel configuration), and storing each selected frequency rotation values in the set. Thus, during operation, the servicing wireless device 102 may select and apply the frequency rotation values corresponding to the current channel configuration, which may reduce the PAPR for transmitted signals compared to the use of standardized frequency rotation values.

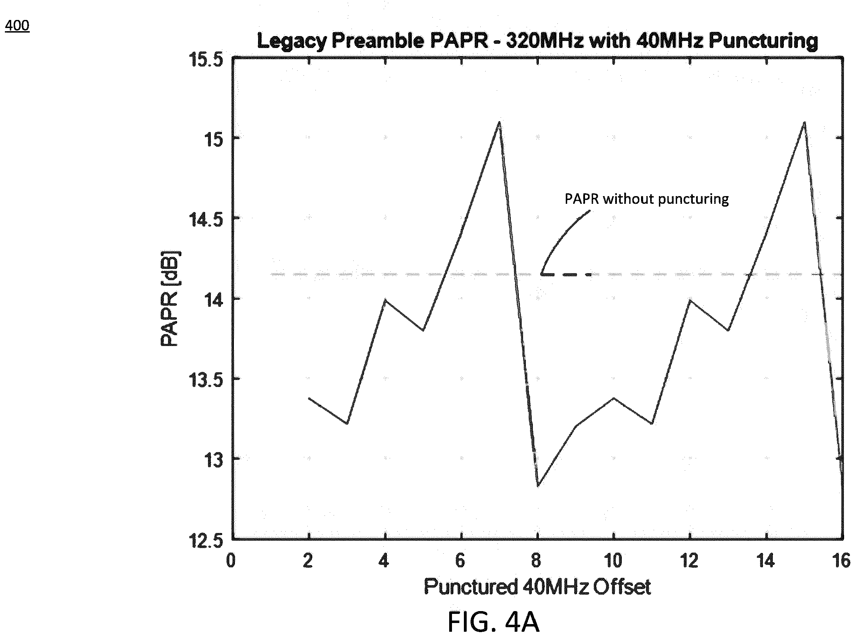

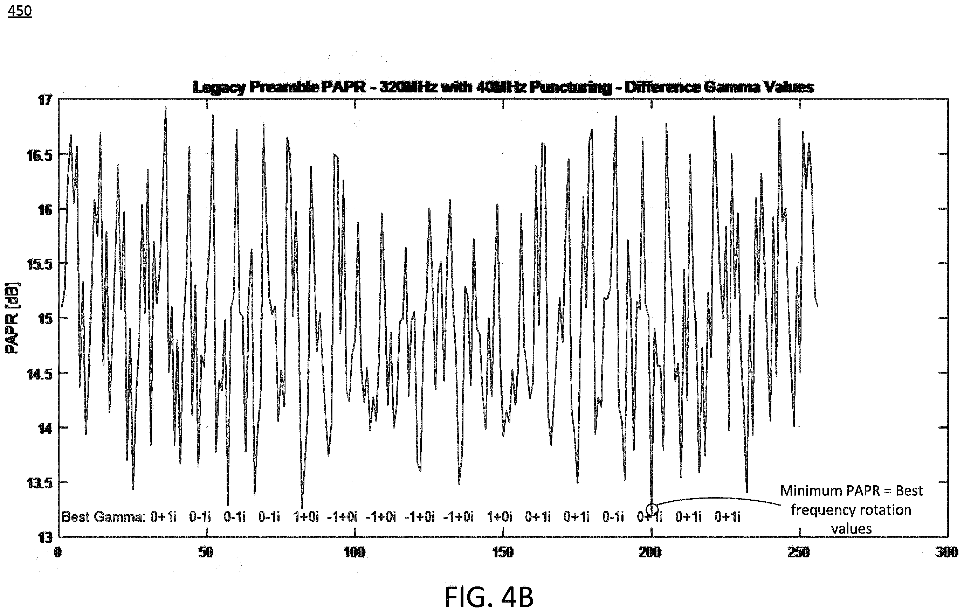

Another illustrative and non-limiting scenario is described with reference to FIGs. 4A and 4B. FIG. 4A illustrates a plot that is similar to that shown in FIG. 3A, which illustrates the PAPR value per each sub-carrier index. However, the plot as shown in FIG. 4A corresponds to a channel configuration for a 320 MHz channel having a total of sixteen 20 MHz sub-channels. For the puncturing configuration as shown in FIG. 4B, the first two 20 MHz-sub-channels are punctured, creating a 40 MHz band within the 320 MHz channel that is unused. Thus, the channel configurations as discussed herein may identify two or more of the plurality of sub-channels being punctured at respective spectral locations within the wireless channel.

FIG. 4B therefore represents a sweep over the frequency rotation values with a resolution (e.g. quantization) of 0 and 180 degrees when the first two 20 MHz sub-channels of the 320 MHz channel are punctured, and represents 256 data points. Again, each of these 256 data points represents the frequency rotation values to be applied to the sixteen 20 MHz sub-carriers for this particular puncturing configuration, as well as the corresponding computed maximum PAPR value. As noted above, due to the use of the aforementioned phase quantization values, the number of possible combinations for two punctured 20 MHz sub-channels within a 320 MHZ channel bandwidth is $4^n$, with n representing the total number of sub-channels (16 in this scenario). Therefore, the 256 data points as shown in FIG. 4B represent a sample subset of a larger total number of data points in this scenario, which are obtained by using a phase quantization of 0 and 180 degrees. The additional data points have been truncated for ease of explanation and brevity.

As was the case for FIG. 3B, there are likewise several options in which the application of the frequency rotation values for the 320 MHz puncturing confirmation reduces the maximum PAPR to less than that of the non-punctured signal (14.1 dB as shown in FIG. 4A). The optimum or "best" frequency rotation values are thus selected that correspond to (in this illustrative scenario and from among the subset of data samples as shown) a lowest maximum PAPR value of about 13.2 dB. Thus, and as noted above, the predetermined PAPR threshold may comprise the lowest maximum PAPR value) across all quantized phase combinations of frequency rotation values or a smaller subset thereof (0 and 180 degrees in the scenario as shown in FIG. 4B), may be less than a maximum PAPR value resulting from the transmission of a signal using a non-punctured channel configuration (i.e. a 320 MHz channel without channel puncturing). Again, this simulation and analysis may be expanded to the total larger number of data points that cover all quantized phase combinations of frequency rotation values or, alternatively, a smaller subset thereof to obtain frequency rotation values that satisfy the predetermined PAPR value.

Wireless Communication Device Architecture

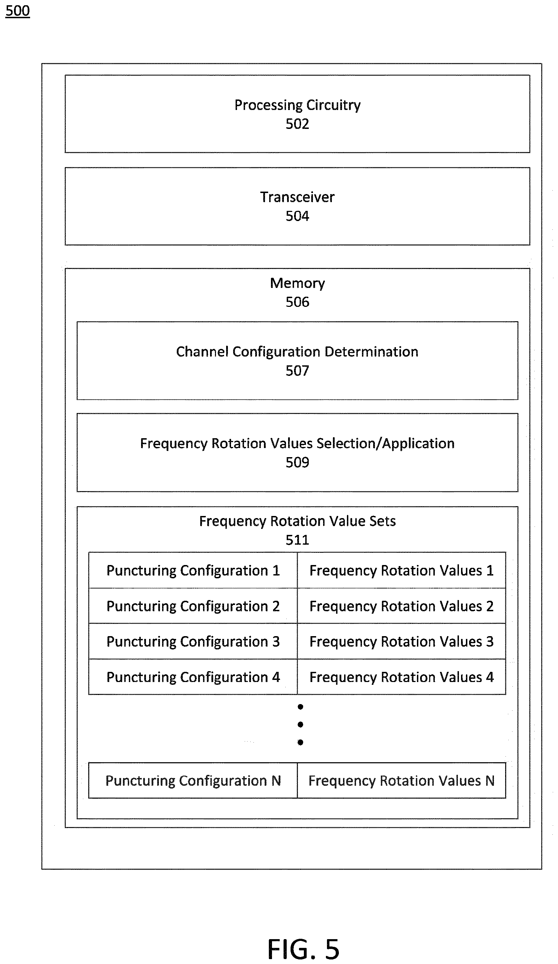

FIG. 5 illustrates a device, in accordance with the disclosure. The device 500 may be identified with one or more devices operating within a wireless network in accordance with any suitable number and/or type of communication protocols. The device 500 may be identified with a wireless communication device, such as the servicing wireless device 102 as shown and discussed herein with respect to FIG. 1. The device 500 may perform any of the functionality as described herein with respect to selecting and applying frequency rotation values on a per channel configuration basis. To do so, the device 500 may include processing circuitry 502, a transceiver 504, and a memory 506. The components shown in FIG. 5 are provided for ease of explanation, and the device 500 may implement additional, less, or alternative components as those shown in FIG. 5.

The processing circuitry 502 may be configured as any suitable number and/or type of computer processors, which may function to control the device 500 and/or other components of the device 500. The processing circuitry 502 may be identified with one or more processors (or suitable portions thereof) implemented by the device 500. The processing circuitry 502 may be identified with one or more processors such as a host processor, a digital signal processor, one or more microprocessors, graphics processors, baseband processors, microcontrollers, an application-specific integrated circuit (ASIC), part (or the entirety of ) a field-programmable gate array (FPGA), etc. Although referred to as processing circuitry herein, it is understood that the processing circuitry 502 may work in conjunction with software components to execute machine readable-instructions stored in the memory 506, to execute sets of instructions or code, etc. to realize the various techniques as described herein.

In any event, the processing circuitry 502 is configured to carry out instructions to perform arithmetical, logical, and/or input/output (I/O) operations, and/or to control the operation of one or more components of device 500 to perform various functions associated with the techniques as described herein. The processing circuitry 502 may include one or more microprocessor cores, memory registers, buffers, clocks, etc., and may generate electronic control signals associated with the components of the device 500 to control and/or modify the operation of these components. The processing circuitry 502 may communicate with and/or control functions associated with the transceiver 504 and/or the memory 506.

The transceiver 504 may be implemented as any suitable number and/or type of components configured to transmit and/or receive wireless signals in accordance with any suitable number and/or type of communication protocols, as discussed herein. These may include, in some non-limiting and illustrative scenarios, WiFi protocols, such as WiFi 6 (IEEE 802.11ax), WiFi 7 (IEEE 802.be), etc. The transceiver 504 may include any suitable type of components to facilitate this functionality, including components associated with known transceiver, transmitter, and/or receiver operation, configurations, and implementations. Although depicted in FIG. 5 as a transceiver, the transceiver 504 may include any suitable number of transmitters, receivers, or combinations of these that may be integrated into a single transceiver or as multiple transceivers or transceiver modules. The transceiver 504 may include components typically identified with transmitter and receiver architectures, and thus include antennas, ports, power amplifiers (PAs), filters, mixers, local oscillators (LOs), low noise amplifiers (LNAs), upconverters, downconverters, channel tuners, analog-to-digital converters (ADCs), digital to analog converters, intermediate frequency (IF) amplifiers and/or filters, modulators, demodulators, baseband processors, etc.

Regardless of the particular implementation, the transceiver 504 may include one or more components configured to transmit and/or receive data using any suitable number frequency bands in accordance with any suitable number of communication standards and protocols. The transceiver 504 may be configured to receive data and/or listen on certain frequency bands as discussed herein to perform channel observations. Additionally, the transceiver 504 may include one or more components configured to transmit data signals in accordance with a determined channel configuration, which may include transmitting data signals after the application of respective frequency rotation values to the subcarriers. The transceiver 504 may be controlled by the processing circuitry 502 to transmit data signals using the subchannels, channel bandwidth, etc., identified via the currently-selected channel configuration, as discussed herein

The memory 506 is configured to store data and/or instructions such that, when the instructions are executed by the processing circuitry 502, cause the device 500 to perform any of the various functions as described herein. The memory 506 may be implemented as any suitable volatile and/or non-volatile memory, including, in some illustrative and non-limiting scenarios, read-only memory (ROM), random access memory (RAM), flash memory, a magnetic storage media, an optical disc, erasable programmable read only memory (EPROM), programmable read only memory (PROM), etc. The memory 506 may be non-removable, removable, or a combination of both. The memory 506 may be implemented as a non-transitory computer readable medium storing one or more executable instructions such as logic, algorithms, code, etc.

As further discussed below, the instructions, logic, code, etc., stored in the memory 506 are represented by the various modules as shown in FIG. 5, which may enable the various processing operations as disclosed herein to be functionally realized. Alternatively, if the processing operations described herein are implemented via hardware, the modules shown in FIG. 5 and associated with the memory 506 may include instructions and/or code to facilitate control and/or to monitor the operation of such hardware components. In other words, the modules shown in FIG. 5 are provided for ease of explanation regarding the functional association between hardware and software components. Thus, the processing circuitry 502 may execute the instructions stored in these respective modules in conjunction with one or more hardware components to perform the various functions associated with the various techniques as discussed herein.

As shown in FIG. 5, the memory 506 may store frequency rotation value sets 511. The frequency rotation value sets 511 may comprise any suitable number of frequency rotation values, each being stored in a manner that enables each of the frequency rotation values to be correlated with a respective channel configuration. Thus, the frequency rotation value sets may comprise frequency rotation values for each of the channel configurations that may be determined and used by the device 500 for data transmissions. Each of the frequency rotation values stored in the memory 506 may be identified with a selection of frequency rotation values from among a number of frequency rotation values per channel configuration, as discussed herein. Again, this may comprise the selection of frequency rotation values having quantized phase values (such as 0 degrees, +90 degrees, -90 degrees, 180 degrees, etc.), per each channel configuration, which results in a lowest maximum PAPR value or otherwise meets a predetermined PAPR value threshold condition.

The executable instructions stored in the channel configuration determination module 507 may facilitate, in conjunction with execution via the processing circuitry 502, the device 500 determining a current channel configuration for data transmissions. The selection of a channel configuration may be made in any suitable manner, including the use of known techniques. In various illustrative and non-limiting scenarios, the channel configuration may be determined using any suitable parameters that are derived from a channel observation by the device 500, receiving and decoding information from the network, receiving an indication from another device regarding current interference and/or the use of certain sub-channels, etc.

The executable instructions stored in the frequency rotation values selection/application module 509 may facilitate, in conjunction with execution via the processing circuitry 502, the selection and application of one of the frequency rotation values from among the frequency rotation value sets 511. This may include the device 500 identifying the current channel configuration, and then selecting the corresponding frequency rotation values from the memory 506 that are mapped to that specific channel configuration. This may further comprise the device 500 applying the selected frequency rotation values to the sub-channels of the channel as identified by the channel configuration. Again, the application of the frequency rotation values may comprise a multiplication operation that is performed in the digital signal domain as part of one or more DSP operations, which results in a multiplication of each respective frequency rotation value by each of the sub-channels within the channel.

A process flow

The process flow 600 may be performed via any suitable type of wireless communication device, such as one or more devices operating within a wireless network, in accordance with any suitable number and/or type of communication protocols. The process flow 600 may be performed, in various illustrative and non-limiting scenarios, via the servicing wireless device 102 as shown and discussed herein with respect to FIG. 1 and/or the device 500 as shown and described with respect to FIG. 5.

The process flow 600 begins with a determination (block 602) of whether a change to the current channel configuration is needed. Thus, the first step in the process flow 600 assumes that a previous determination has already been made with respect to the use of a particular channel configuration, which may comprise any of the techniques to do so as discussed herein, including known techniques. Thus, the determination (block 602) is with respect to whether a previously-determined channel configuration may continue to be used or needs to be updated. If the current channel configuration needs to be updated, then the process flow 600 may continue to block 606. However, if the channel configuration is to remain unchanged, then the process flow 600 continues to block 604.

In either case, the process flow 600 comprises the selection (block 608) of frequency rotation values for the currently-selected channel configuration. This may include the selection of frequency rotation values from a frequency rotation value set stored in a memory, as discussed above with respect to FIG. 5.

Once the frequency rotation values are selected based upon the currently-used channel configuration, then the process flow 600 may comprise applying (block 610) the frequency rotation values to the sub-channels of the channel identified by the channel configuration. This may include a multiplication operation in the digital domain via one or more DSP operations, as noted herein.

Upon applying (block 610) frequency rotation values to the sub-channels of the channel, the process flow 600 may comprise transmitting data signals in accordance with the applied frequency rotation values. In other words, the application of the frequency rotation values in the digital domain may result in an updated set of digital data, which is then transmitted in accordance with the current channel configuration. Again, such a data transmission may be performed in accordance with any suitable communication protocol and/or standard, such as the WiFi 7 standards as discussed herein.

The process flow 600 may operate dynamically in response to changing channel and/or network conditions. Thus, the process flow 600 may comprise monitoring the various channel parameters, conditions, messages, etc. as noted above to periodically or continuously determine (block 602) whether the channel configuration should be updated. Based upon this determination, the same frequency rotation values or new, updated frequency rotation values may then be applied to the sub-channels for subsequent data transmissions.

General Operation of an Access Point

An access point (AP) is provided. The AP comprises processing circuitry configured to: determine, from among a plurality of channel configurations, a channel configuration of a wireless channel, with each one of the plurality of channel configurations identifying a plurality of sub-channels within the wireless channel in accordance with a communication protocol, with one of the plurality of sub-channels being punctured at a spectral location within the wireless channel; apply, for the determined channel configuration, frequency rotation values to the plurality of sub-channels within the wireless channel, with the frequency rotation values being selected from among a set of frequency rotation values, and each of the frequency rotation values from among the set of frequency rotation values being different from one another and corresponding to each respective one of the plurality of channel configurations; and a transmitter configured to transmit data via the wireless channel using the determined channel configuration in accordance with the application of the selected frequency rotation values to the respective sub-channels within the wireless channel. In addition or in alternative to and in any combination with the optional features previously explained in this paragraph, the set of frequency rotation values are based upon a selection, for each one of the plurality of channel configurations, of frequency rotation values that result in a corresponding Peak to Average Power Ratio (PAPR) value being less than or equal to a predetermined threshold PAPR value. In addition or in alternative to and in any combination with the optional features previously explained in this paragraph, for a channel configuration from among the plurality of channel configurations, the predetermined PAPR threshold is less than a PAPR value resulting from a transmission of a signal using the channel configuration without a punctured sub-channel. In addition or in alternative to and in any combination with the optional features previously explained in this paragraph, the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective maximum plurality of PAPR values. In addition or in alternative to and in any combination with the optional features previously explained in this paragraph, the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations. In addition or in alternative to and in any combination with the optional features previously explained in this paragraph, the set of frequency rotation values are determined, for each one of the plurality of channel configurations, based upon a selection of frequency rotation values that results in a lowest maximum PAPR value from among the predetermined number of combinations of frequency rotation values. In addition or in alternative to and in any combination with the optional features previously explained in this paragraph, the communication protocol comprises an Institute of Electrical and Electronics Engineers (IEEE) IEEE 802.be communication standard. In addition or in alternative to and in any combination with the optional features previously explained in this paragraph, the plurality of sub-channels have a bandwidth of 20 MHz. In addition or in alternative to and in any combination with the optional features previously explained in this paragraph, the wireless channel has a bandwidth of 160 MHz or 320 MHz. In addition or in alternative to and in any combination with the optional features previously explained in this paragraph, the plurality of channel configurations comprise a channel configuration that identifies a plurality of sub-channels within the wireless channel in accordance with the communication protocol, with two or more of the plurality of sub-channels being punctured at a respective spectral location within the wireless channel.

General Operation of a Non-Transitory Computer Readable Medium

A non-transitory computer readable medium is provided. The non-transitory computerreadable medium has instructions stored thereon that, when executed by one or more processors of a wireless communication device, cause the wireless communication device to: determine, from among a plurality of channel configurations, a channel configuration of a wireless channel, with each one of the plurality of channel configurations identifying a plurality of sub-channels within the wireless channel in accordance with a communication protocol, and each of the frequency rotation values from among the set of frequency rotation values being different from one another and corresponding to each respective one of the plurality of channel configurations; apply, for the selected channel configuration, frequency rotation values to the plurality of sub-channels within the wireless channel, with the frequency rotation values being selected from among a set of frequency rotation values, with each one of the set of frequency rotation values being different from one another and corresponding to each respective one of the plurality of channel configurations; and cause data to be transmitted via the wireless channel using the determined channel configuration in accordance with the application of the selected frequency rotation values to the respective sub-channels within the wireless channel. In addition or in alternative to and in any combination with the optional features previously explained in this paragraph, the set of frequency rotation values are based upon a selection, for each one of the plurality of channel configurations, of frequency rotation values that result in a corresponding Peak to Average Power Ratio (PAPR) value being less than or equal to a predetermined threshold PAPR value. In addition or in alternative to and in any combination with the optional features previously explained in this paragraph, for a channel configuration from among the plurality of channel configurations, the predetermined PAPR threshold is less than a PAPR value resulting from a transmission of a signal using the channel configuration without a punctured sub-channel. In addition or in alternative to and in any combination with the optional features previously explained in this paragraph, the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective plurality of maximum PAPR values. In addition or in alternative to and in any combination with the optional features previously explained in this paragraph, the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations. In addition or in alternative to and in any combination with the optional features previously explained in this paragraph, the set of frequency rotation values are determined, for each one of the plurality of channel configurations, based upon a selection of frequency rotation values that results in a lowest maximum PAPR value from among the predetermined number of combinations of frequency rotation values. In addition or in alternative to and in any combination with the optional features previously explained in this paragraph, the communication protocol comprises an Institute of Electrical and Electronics Engineers (IEEE) 802.be communication standard. In addition or in alternative to and in any combination with the optional features previously explained in this paragraph, the plurality of sub-channels have a bandwidth of 20 MHz. In addition or in alternative to and in any combination with the optional features previously explained in this paragraph, the wireless channel has a bandwidth of 160 MHz or 320 MHz. In addition or in alternative to and in any combination with the optional features previously explained in this paragraph, the plurality of channel configurations comprise a channel configuration that identifies a plurality of sub-channels within the wireless channel in accordance with the communication protocol, with two or more of the plurality of sub-channels being punctured at a respective spectral location within the wireless channel.

Examples

The following examples pertain to various techniques of the present disclosure.
An example (e.g. example 1) is directed to an access point (AP), comprising: processing circuitry configured to: determine, from among a plurality of channel configurations, a channel configuration of a wireless channel, wherein each one of the plurality of channel configurations identifies a plurality of sub-channels within the wireless channel in accordance with a communication protocol, with one of the plurality of sub-channels being punctured at a spectral location within the wireless channel; apply, for the determined channel configuration, frequency rotation values to the plurality of sub-channels within the wireless channel, wherein the frequency rotation values are selected from among a set of frequency rotation values, with each of the frequency rotation values from among the set of frequency rotation values being different from one another and corresponding to each respective one of the plurality of channel configurations; and a transmitter configured to transmit data via the wireless channel using the determined channel configuration in accordance with the application of the selected frequency rotation values to the respective sub-channels within the wireless channel.

Another example (e.g. example 2) relates to a previously-described example (e.g. example 1), wherein the set of frequency rotation values are based upon a selection, for each one of the plurality of channel configurations, of frequency rotation values that result in a corresponding Peak to Average Power Ratio (PAPR) value being less than a predetermined threshold PAPR value.

Another example (e.g. example 3) relates to a previously-described example (e.g. one or more of examples 1-2), wherein, for a channel configuration from among the plurality of channel configurations, the predetermined PAPR threshold is less than a PAPR value resulting from a transmission of a signal using the channel configuration without a punctured sub-channel.

Another example (e.g. example 4) relates to a previously-described example (e.g. one or more of examples 1-3), wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective maximum plurality of PAPR values.

Another example (e.g. example 5) relates to a previously-described example (e.g. one or more of examples 1-4), wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

Another example (e.g. example 6) relates to a previously-described example (e.g. one or more of examples 1-5), wherein the set of frequency rotation values are determined, for each one of the plurality of channel configurations, based upon a selection of frequency rotation values that results in a lowest maximum PAPR value from among the predetermined number of combinations of frequency rotation values.

Another example (e.g. example 7) relates to a previously-described example (e.g. one or more of examples 1-6), wherein the communication protocol comprises an Institute of Electrical and Electronics Engineers (IEEE) IEEE 802.be communication standard.

Another example (e.g. example 8) relates to a previously-described example (e.g. one or more of examples 1-7), wherein the plurality of sub-channels have a bandwidth of 20 MHz.

Another example (e.g. example 9) relates to a previously-described example (e.g. one or more of examples 1-8), wherein the wireless channel has a bandwidth of 160 MHz or 320 MHz.

Another example (e.g. example 10) relates to a previously-described example (e.g. one or more of examples 1-9), wherein the plurality of channel configurations comprise a channel configuration that identifies a plurality of sub-channels within the wireless channel in accordance with the communication protocol, with two or more of the plurality of sub-channels being punctured at a respective spectral location within the wireless channel.

An example (e.g. example 11) is directed to a non-transitory computer readable medium having instructions stored thereon that, when executed by one or more processors of a wireless communication device, cause the wireless communication device to: determine, from among a plurality of channel configurations, a channel configuration of a wireless channel, wherein each one of the plurality of channel configurations identifies a plurality of sub-channels within the wireless channel in accordance with a communication protocol, with each of the frequency rotation values from among the set of frequency rotation values being different from one another and corresponding to each respective one of the plurality of channel configurations; apply, for the selected channel configuration, frequency rotation values to the plurality of sub-channels within the wireless channel, wherein the frequency rotation values are selected from among a set of frequency rotation values, with each one of the set of frequency rotation values being different from one another and corresponding to each respective one of the plurality of channel configurations; and cause data to be transmitted via the wireless channel using the determined channel configuration in accordance with the application of the selected frequency rotation values to the respective sub-channels within the wireless channel.

Another example (e.g. example 12) relates to a previously-described example (e.g. example 11), wherein the set of frequency rotation values are based upon a selection, for each one of the plurality of channel configurations, of frequency rotation values that result in a corresponding Peak to Average Power Ratio (PAPR) value being less than or equal to a predetermined threshold PAPR value.

Another example (e.g. example 13) relates to a previously-described example (e.g. one or more of examples 11-12), wherein, for a channel configuration from among the plurality of channel configurations, the predetermined PAPR threshold is less than a PAPR value resulting from a transmission of a signal using the channel configuration without a punctured sub-channel.

Another example (e.g. example 14) relates to a previously-described example (e.g. one or more of examples 11-13), wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective plurality of maximum PAPR values.

Another example (e.g. example 15) relates to a previously-described example (e.g. one or more of examples 11-14), wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

Another example (e.g. example 16) relates to a previously-described example (e.g. one or more of examples 11-15), wherein the set of frequency rotation values are determined, for each one of the plurality of channel configurations, based upon a selection of frequency rotation values that results in a lowest maximum PAPR value from among the predetermined number of combinations of frequency rotation values.

Another example (e.g. example 17) relates to a previously-described example (e.g. one or more of examples 11-16), wherein the communication protocol comprises an Institute of Electrical and Electronics Engineers (IEEE) 802.be communication standard.

Another example (e.g. example 18) relates to a previously-described example (e.g. one or more of examples 11-17), wherein the plurality of sub-channels have a bandwidth of 20 MHz.

Another example (e.g. example 19) relates to a previously-described example (e.g. one or more of examples 11-18), wherein the wireless channel has a bandwidth of 160 MHz or 320 MHz.

Another example (e.g. example 20) relates to a previously-described example (e.g. one or more of examples 11-19), wherein the plurality of channel configurations comprise a channel configuration that identifies a plurality of sub-channels within the wireless channel in accordance with the communication protocol, with two or more of the plurality of sub-channels being punctured at a respective spectral location within the wireless channel.

An example (e.g. example 21) is directed to an access point (AP), comprising: a processing means for: determining, from among a plurality of channel configurations, a channel configuration of a wireless channel, wherein each one of the plurality of channel configurations identifies a plurality of sub-channels within the wireless channel in accordance with a communication protocol, with one of the plurality of sub-channels being punctured at a spectral location within the wireless channel; applying, for the determined channel configuration, frequency rotation values to the plurality of sub-channels within the wireless channel, wherein the frequency rotation values are selected from among a set of frequency rotation values, with each of the frequency rotation values from among the set of frequency rotation values being different from one another and corresponding to each respective one of the plurality of channel configurations; and a transmission means for transmitting data via the wireless channel using the determined channel configuration in accordance with the application of the selected frequency rotation values to the respective sub-channels within the wireless channel.

Another example (e.g. example 22) relates to a previously-described example (e.g. example 21), wherein the set of frequency rotation values are based upon a selection, for each one of the plurality of channel configurations, of frequency rotation values that result in a corresponding Peak to Average Power Ratio (PAPR) value being less than or equal to a predetermined threshold PAPR value.

Another example (e.g. example 23) relates to a previously-described example (e.g. one or more of examples 21-22), wherein, for a channel configuration from among the plurality of channel configurations, the predetermined PAPR threshold is less than a PAPR value resulting from a transmission of a signal using the channel configuration without a punctured sub-channel.

Another example (e.g. example 24) relates to a previously-described example (e.g. one or more of examples 21-23), wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective maximum plurality of PAPR values.

Another example (e.g. example 25) relates to a previously-described example (e.g. one or more of examples 21-24), wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

Another example (e.g. example 26) relates to a previously-described example (e.g. one or more of examples 21-25), wherein the set of frequency rotation values are determined, for each one of the plurality of channel configurations, based upon a selection of frequency rotation values that results in a lowest maximum PAPR value from among the predetermined number of combinations of frequency rotation values.

Another example (e.g. example 27) relates to a previously-described example (e.g. one or more of examples 21-26), wherein the communication protocol comprises an Institute of Electrical and Electronics Engineers (IEEE) IEEE 802.be communication standard.

Another example (e.g. example 28) relates to a previously-described example (e.g. one or more of examples 21-27), wherein the plurality of sub-channels have a bandwidth of 20 MHz.

Another example (e.g. example 29) relates to a previously-described example (e.g. one or more of examples 21-28), wherein the wireless channel has a bandwidth of 160 MHz or 320 MHz.

Another example (e.g. example 30) relates to a previously-described example (e.g. one or more of examples 21-29), wherein the plurality of channel configurations comprise a channel configuration that identifies a plurality of sub-channels within the wireless channel in accordance with the communication protocol, with two or more of the plurality of sub-channels being punctured at a respective spectral location within the wireless channel.

An example (e.g. example 31) is directed to a non-transitory computer readable medium having instructions stored thereon that, when executed by a processing means of a wireless communication device, cause the wireless communication device to: determine, from among a plurality of channel configurations, a channel configuration of a wireless channel, wherein each one of the plurality of channel configurations identifies a plurality of sub-channels within the wireless channel in accordance with a communication protocol, with each of the frequency rotation values from among the set of frequency rotation values being different from one another and corresponding to each respective one of the plurality of channel configurations; apply, for the selected channel configuration, frequency rotation values to the plurality of sub-channels within the wireless channel, wherein the frequency rotation values are selected from among a set of frequency rotation values, with each one of the set of frequency rotation values being different from one another and corresponding to each respective one of the plurality of channel configurations; and cause data to be transmitted via the wireless channel using the determined channel configuration in accordance with the application of the selected frequency rotation values to the respective sub-channels within the wireless channel.

Another example (e.g. example 32) relates to a previously-described example (e.g. example 31), wherein the set of frequency rotation values are based upon a selection, for each one of the plurality of channel configurations, of frequency rotation values that result in a corresponding Peak to Average Power Ratio (PAPR) value being less than a predetermined threshold PAPR value.

Another example (e.g. example 33) relates to a previously-described example (e.g. one or more of examples 31-32), wherein, for a channel configuration from among the plurality of channel configurations, the predetermined PAPR threshold is less than a PAPR value resulting from a transmission of a signal using the channel configuration without a punctured sub-channel.

Another example (e.g. example 34) relates to a previously-described example (e.g. one or more of examples 31-33), wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective plurality of maximum PAPR values.

Another example (e.g. example 35) relates to a previously-described example (e.g. one or more of examples 31-34), wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

Another example (e.g. example 36) relates to a previously-described example (e.g. one or more of examples 31-35), wherein the set of frequency rotation values are determined, for each one of the plurality of channel configurations, based upon a selection of frequency rotation values that results in a lowest maximum PAPR value from among the predetermined number of combinations of frequency rotation values.

Another example (e.g. example 37) relates to a previously-described example (e.g. one or more of examples 31-36), wherein the communication protocol comprises an Institute of Electrical and Electronics Engineers (IEEE) 802.be communication standard.

Another example (e.g. example 38) relates to a previously-described example (e.g. one or more of examples 31-37), wherein the plurality of sub-channels have a bandwidth of 20 MHz.

Another example (e.g. example 39) relates to a previously-described example (e.g. one or more of examples 31-38), wherein the wireless channel has a bandwidth of 160 MHz or 320 MHz.

Another example (e.g. example 40) relates to a previously-described example (e.g. one or more of examples 31-39), wherein the plurality of channel configurations comprise a channel configuration that identifies a plurality of sub-channels within the wireless channel in accordance with the communication protocol, with two or more of the plurality of sub-channels being punctured at a respective spectral location within the wireless channel.

An apparatus as shown and described.

A method as shown and described.

Conclusion

The aforementioned description of the specific aspects will so fully reveal the general nature of the disclosure that others can, by applying knowledge within the skill of the art, readily modify and/or adapt for various applications such specific aspects, without undue experimentation, and without departing from the general concept of the present disclosure. Therefore, such adaptations and modifications are intended to be within the meaning and range of equivalents of the disclosed aspects, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

References in the specification to "one aspect," "an aspect," "an exemplary aspect," etc., indicate that the aspect described may include a particular feature, structure, or characteristic, but every aspect may not necessarily include the particular feature, structure, or characteristic. Moreover, such phrases are not necessarily referring to the same aspect. Further, when a particular feature, structure, or characteristic is described in connection with an aspect, it is submitted that it is within the knowledge of one skilled in the art to affect such feature, structure, or characteristic in connection with other aspects whether or not explicitly described.

The exemplary aspects described herein are provided for illustrative purposes, and are not limiting. Other exemplary aspects are possible, and modifications may be made to the exemplary aspects. Therefore, the specification is not meant to limit the disclosure. Rather, the scope of the disclosure is defined only in accordance with the following claims and their equivalents.

Aspects may be implemented in hardware (e.g., circuits), firmware, software, or any combination thereof. Aspects may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general purpose computer.

For the purposes of this discussion, the term "processing circuitry" or "processor circuitry" shall be understood to be circuit(s), processor(s), logic, or a combination thereof. For example, a circuit can include an analog circuit, a digital circuit, state machine logic, other structural electronic hardware, or a combination thereof. A processor can include a microprocessor, a digital signal processor (DSP), or other hardware processor. The processor can be "hardcoded" with instructions to perform corresponding function(s) according to aspects described herein. Alternatively, the processor can access an internal and/or external memory to retrieve instructions stored in the memory, which when executed by the processor, perform the corresponding function(s) associated with the processor, and/or one or more functions and/or operations related to the operation of a component having the processor included therein.

In one or more of the exemplary aspects described herein, processing circuitry can include memory that stores data and/or instructions. The memory can be any well-known volatile and/or non-volatile memory, including, for example, read-only memory (ROM), random access memory (RAM), flash memory, a magnetic storage media, an optical disc, erasable programmable read only memory (EPROM), and programmable read only memory (PROM). The memory can be non-removable, removable, or a combination of both.

**Claims**

1. An access point (AP), comprising:

   processing circuitry configured to:

      determine, from among a plurality of channel configurations, a channel configuration of a wireless channel, wherein each one of the plurality of channel configurations identifies a plurality of sub-channels within the wireless channel in accordance with a communication protocol, with one of the plurality of sub-channels being punctured at a spectral location within the wireless channel;

apply, for the determined channel configuration, frequency rotation values to the plurality of sub-channels within the wireless channel,

wherein the frequency rotation values are selected from among a set of frequency rotation values, with each of the frequency rotation values from among the set of frequency rotation values being different from one another and corresponding to each respective one of the plurality of channel configurations; and

a transmitter configured to transmit data via the wireless channel using the determined channel configuration in accordance with the application of the selected frequency rotation values to the respective sub-channels within the wireless channel.

2. The AP of claim 1, wherein the set of frequency rotation values are based upon a selection, for each one of the plurality of channel configurations, of frequency rotation values that result in a corresponding Peak to Average Power Ratio (PAPR) value being less than or equal to a predetermined threshold PAPR value.

3. The AP of claim 2, wherein, for a channel configuration from among the plurality of channel configurations, the predetermined PAPR threshold is less than a PAPR value resulting from a transmission of a signal using the channel configuration without a punctured sub-channel.

4. The AP of one of the previous claims, wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective maximum plurality of PAPR values.

5. The AP of claim 4, wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

6. The AP of claim 5, wherein the set of frequency rotation values are determined, for each one of the plurality of channel configurations, based upon a selection of frequency rotation values that results in a lowest maximum PAPR value from among the predetermined number of combinations of frequency rotation values.

7. The AP of one of the previous claims, wherein the communication protocol comprises an Institute of Electrical and Electronics Engineers (IEEE) IEEE 802.be communication standard.

8. The AP of one of the previous claims, wherein the plurality of sub-channels have a bandwidth of 20 MHz.

9. The AP of one of the previous claims, wherein the wireless channel has a bandwidth of 160 MHz or 320 MHz.

10. The AP of one of the previous claims, wherein the plurality of channel configurations comprise a channel configuration that identifies a plurality of sub-channels within the wireless channel in accordance with the communication protocol, with two or more of the plurality of sub-channels being punctured at a respective spectral location within the wireless channel.

11. A non-transitory computer readable medium having instructions stored thereon that, when executed by one or more processors of a wireless communication device, cause the wireless communication device to:

determine, from among a plurality of channel configurations, a channel configuration of a wireless channel, wherein each one of the plurality of channel configurations identifies a plurality of sub-channels within the wireless channel in accordance with a communication protocol, with each of the frequency rotation values from among the set of frequency rotation values being different from one another and corresponding to each respective one of the plurality of channel configurations;

apply, for the selected channel configuration, frequency rotation values to the plurality of sub-channels within the wireless channel,

wherein the frequency rotation values are selected from among a set of frequency rotation values, with each one of the set of frequency rotation values being different from one another and corresponding to each respective one of the plurality of channel configurations; and

cause data to be transmitted via the wireless channel using the determined channel configuration in accordance with the application of the selected frequency rotation values to the respective sub-channels within the wireless channel.

12. The non-transitory computer readable medium of claim 11, wherein the set of frequency rotation values are based upon a selection, for each one of the plurality of channel configurations, of frequency rotation values that result in a corresponding Peak to Average Power Ratio (PAPR) value being less than or equal to a predetermined threshold PAPR value.

13. The non-transitory computer readable medium of claim 12, wherein, for a channel configuration from among the plurality of channel configurations, the predetermined PAPR threshold is less than a PAPR value resulting from a transmission of a signal using the channel configuration without a punctured sub-channel.

14. The non-transitory computer readable medium of claim 11, 12 or 13, wherein the set of frequency rotation values are determined based upon (i) a computation, for each one of the plurality of channel configurations, of a respective plurality of maximum Peak to Average Power Ratio (PAPR) values, each one of the plurality of maximum PAPR values corresponding to an application of different frequency rotation values, and (ii) a selection of frequency rotation values for each one of the plurality of channel configurations that results in a lowest maximum PAPR value from among the respective plurality of maximum PAPR values.

15. The non-transitory computer readable medium of claim 14, wherein the frequency rotation values are determined for each one of the plurality of channel configurations by quantizing the different frequency rotation values to 0 degrees, +90 degrees, -90 degrees, or 180 degrees to obtain a predetermined number of combinations of frequency rotation values for each one of the plurality of channel configurations.

FIG. 1

*Prior art*

FIG. 2

FIG. 3A

Minimum PAPR = Best frequency rotation values

## FIG. 3B

EP 4 498 625 A1

400

**Legacy Preamble PAPR - 320MHz with 40MHz Puncturing**

PAPR without puncturing

FIG. 4A

FIG. 4B

EP 4 498 625 A1

500

Processing Circuitry
502

Transceiver
504

Memory
506

Channel Configuration Determination
507

Frequency Rotation Values Selection/Application
509

Frequency Rotation Value Sets
511

| | |
|---|---|
| Puncturing Configuration 1 | Frequency Rotation Values 1 |
| Puncturing Configuration 2 | Frequency Rotation Values 2 |
| Puncturing Configuration 3 | Frequency Rotation Values 3 |
| Puncturing Configuration 4 | Frequency Rotation Values 4 |
| Puncturing Configuration N | Frequency Rotation Values N |

•
•
•

FIG. 5

600

```
                    ┌─────────────────┐
         ┌──◇ Is there a change in ◇── No ──►│ Use current channel │
         │   the channel configuration?      │   configuration     │
         │            602                     │        604          │
         │            │                       └─────────────────────┘
         │           Yes
         │            ▼
         │   ┌──────────────────────────────────────┐
         │   │ Determine an updated channel          │
         │   │        configuration                  │
         │   │            606                        │
         │   └──────────────────────────────────────┘
         │            │
         │            ▼
         │   ┌──────────────────────────────────────┐
         │   │ Select frequency rotation values for  │◄──
         │   │ the currently selected channel        │
         │   │        configuration                  │
         │   │            608                        │
         │   └──────────────────────────────────────┘
         │            │
         │            ▼
         │   ┌──────────────────────────────────────┐
         │   │ Apply the selected frequency rotation │
         │   │ values to the sub-channels of the     │
         │   │ channel for the currently selected    │
         │   │ channel configuration                 │
         │   │            610                        │
         │   └──────────────────────────────────────┘
         │            │
         │            ▼
         │   ┌──────────────────────────────────────┐
         │   │ Transmit data via the wireless        │
         │   │ channel in accordance with the        │
         │   │ applied frequency rotation values     │
         │   │            612                        │
         │   └──────────────────────────────────────┘
         │            │
         └────────────┘
```

FIG. 6

Europäisches
Patentamt

European
Patent Office

Office européen
des brevets

# EUROPEAN SEARCH REPORT

**Application Number**

EP 23 21 7633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/155874 A1 (PARK EUNSUNG [KR] ET AL) 18 May 2023 (2023-05-18)<br>* figure 2 *<br>* paragraphs [0197] - [0199], [0204], [0205], [0225], [0231], [0246] - [0312] *<br>* paragraphs [0339], [0340] *<br>- - - - - | 1-15 | INV.<br>H04L5/00<br>H04L27/26 |
| X | NO YUJIN ET AL: "Gamma phase rotation for HE PPDU",<br>IEEE 802.11-16/0903R1, IEEE-SA MENTOR, PISCATAWAY, NJ USA<br>,<br>25 July 2016 (2016-07-25), pages 1-26, XP068158320,<br>Retrieved from the Internet:<br>URL:https://mentor.ieee.org/802.11/dcn/16/11-16-0903-01-00ax-gamma-phase-rotation-for-he-ppdu.pptx<br>[retrieved on 2016-07-25]<br>* pages 15-19 *<br>- - - - - | 1-15 | |
| | | | **TECHNICAL FIELDS SEARCHED (IPC)** |
| X | US 2022/353125 A1 (PARK EUNSUNG [KR] ET AL) 3 November 2022 (2022-11-03)<br>* paragraphs [0372] - [0377], [0386] - [0400], [0409] - [0416], [0732] *<br>- - - - - | 1-15 | H04L |

The present search report has been drawn up for all claims

| Place of search | Date of completion of the search | Examiner |
|---|---|---|
| Berlin | 30 May 2024 | Feng, Mei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 7633

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2024

| Patent document cited in search report | Publication date | Patent family member(s) | | Publication date |
|---|---|---|---|---|
| US 2023155874 A1 | 18-05-2023 | US | 2023155874 A1 | 18-05-2023 |
| | | WO | 2021206326 A1 | 14-10-2021 |
| US 2022353125 A1 | 03-11-2022 | US | 2022353125 A1 | 03-11-2022 |
| | | WO | 2021045421 A1 | 11-03-2021 |

EPO FORM P0459

For more details about this annex : see Official Journal of the European Patent Office, No. 12/82